# EUROPEAN PATENT APPLICATION

(11) **EP 2 107 761 A1**
(43) Date of publication of application: **07.10.2009**
(21) Application number: 08006513.9
(22) Date of filing: 31.03.2008
(51) Int. Cl.: H04L 29/08, G06F 17/30

(54) **Method to determine a subgroup of users**

(71) Applicant: Sony Corporation, Tokyo 108-0075 (JP)
(72) Inventor: Eggink, Jana, 70327 Stuttgart (DE); Kemp, Thomas, 70327 Stuttgart (DE); Hagg, Wilhelm, 70327 Stuttgart (DE); Giron, Franck, 70327 Stuttgart (DE); Alonso Garcia, Javier, 70327 Stuttgart (DE)
(74) Representative: Müller - Hoffmann & Partner

(57) **Abstract**

A method to determine a subgroup of users out of a group of users, comprising providing user profiles for each user of said group of users; providing real-time data of users of said group of users; determining said subgroup of users depending on said user profiles and said real-time data.

## Description

An embodiment of the invention relates to method for determining a subgroup of users. A further embodiment of the invention relates to a method for recommendation of a location or event.

It is an objective of the invention to determine a subgroup of users and/or a recommendation of a location or event that could be of interest to a user. It is a further objective of the invention to provide respective hardware.

These objectives are solved by methods/devices according to independent claims 1, 12, 14, and 16.

### BRIEF DESCRIPTION OF THE SERVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
Fig. 1 shows an embodiment where a subgroup of users out of a group of users is determined.
Fig. 2 shows an embodiment where a recommendation of a location or event is determined.
Fig. 3 shows a diagram illustrating how subgroups or a recommendation are determined.
Fig. 4 shows a further diagram illustrating how subgroups or a recommendation are determined.
Fig. 5 shows an embodiment of a device for recommending a location or event to a user of the device.
Fig. 6 shows a device for generating a recommendation.
Fig. 7 shows an embodiment of a hardware realization based on mobile devices connecting to a central server.
Fig. 8 shows a further embodiment of a hardware realization based on a peer-to-peer network.
Fig. 9 shows a block diagram illustrating steps that may be performed when the peer-to-peer network of Fig. 8 is used.
Fig. 10 shows an embodiment of a further hardware realization based on a multi-hop scenario.

### DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is further to be understood that the features of the various embodiments described herein may be combined with each other, unless specifically noted otherwise.

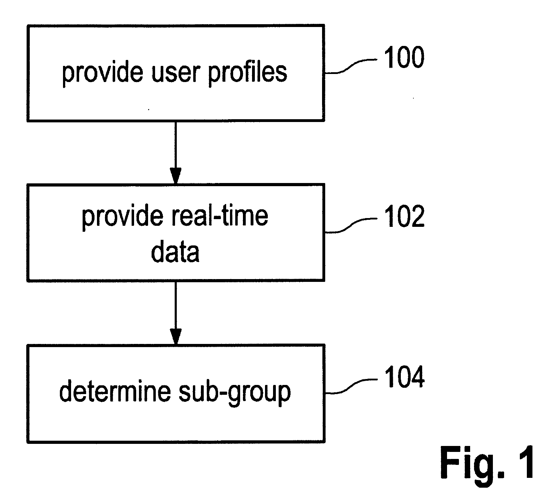

Fig. 1 shows an embodiment where a subgroup of users out of a group of users is determined. In Fig. 1, at 100, user profiles for each user of the group of users are provided. A "user profile" throughout the following description may comprise or relate to any kind of information about the user. For example, the user profile might comprise information regarding the taste in music, restaurants or any form of entertainment of a user. Further, the user profile might indicate demographic data such as gender, age, income level or other personal information of a user.

At 102, real time data of users of the group of users are provided.

Then, at 104, a subgroup of users out of the group of users is determined depending on the user profile and the real time data.

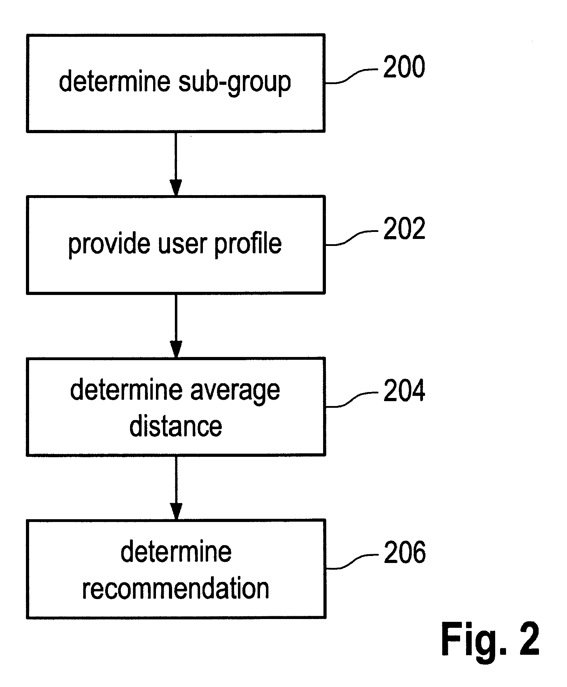

As shown in the flow chart of Fig. 2 illustrating a further embodiment of the invention, the subgroup of users might be used to determine a recommendation to a user who is in need for a recommendation of a location or event of interest.

In order to determine the recommendation, at 200 in Fig. 2, a subgroup is determined based on user profiles and real time data of users in accordance with the embodiment of Fig. 1.

Then, at 202, a user profile of the user in need of the recommendation is provided.

Further, at 204, a distance measure, e.g. an average distance, between the user profile of the user in need of the recommendation and the user profiles of users of the subgroup is determined.

At 206, the recommendation is determined depending on the distance measure, e.g. average distance.

Thus, according to the embodiment of Fig. 2, a recommendation of a location or event of interest to a user might be determined. For example, a user might want to go out to a pub or restaurant in the evening. The user would like to go to a pub/restaurant where people having the same interests as the user usually go or are currently located. Thus, in the real-time data, some information of the past may also be included.

Thus, the task is to automatically find locations where (homogeneous) groups of people congregate. The user in need of the recommendation might carry a personal mobile device, e.g. a mobile phone that is location aware, i.e. the device is able to locate geographic data, e.g. GPS data. In addition, the device may have some knowledge about the user in form of the user profile.

In order to find groups of similar users at the same location, the groups may be formed based on any attribute that is known to the system and expected to be relevant to the single application user, i.e. the user in need of a recommendation. This user in need of recommendation (requesting user) is then provided with recommendations that indicate specific locations and/or the type of people (subgroups of users) who are currently or have been at this specific location.

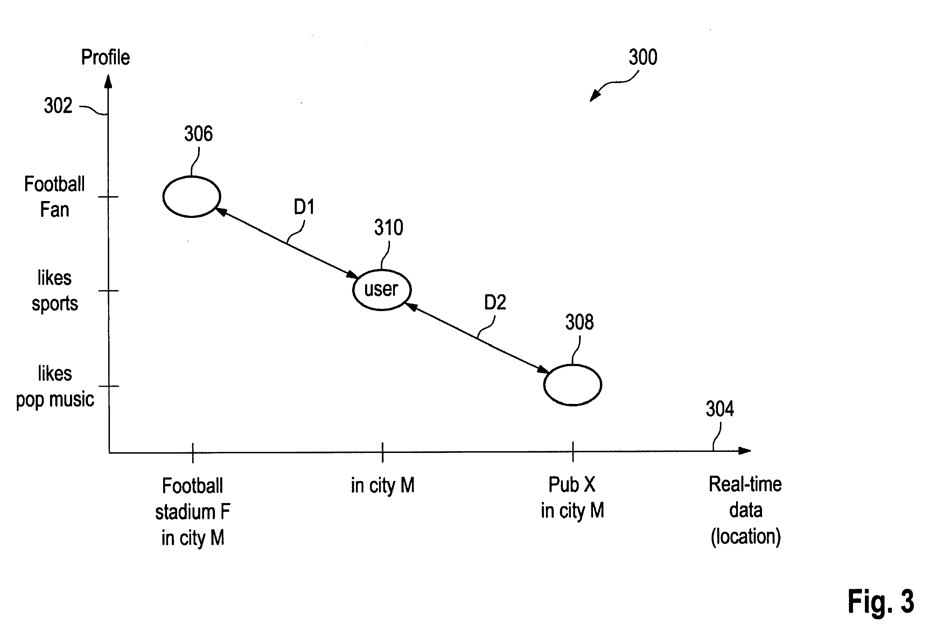

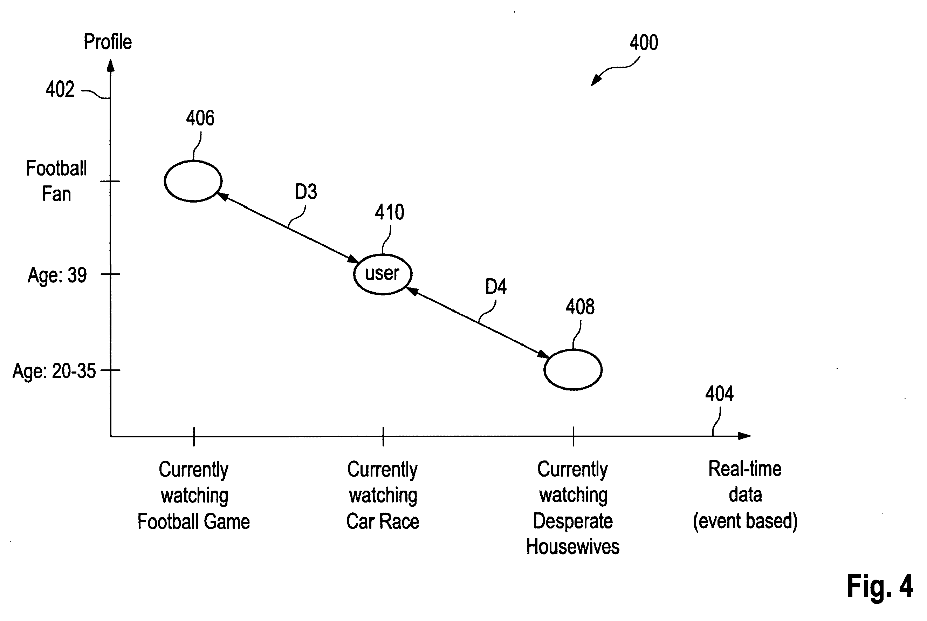

Thus, in Figs. 1 and 2, the subgroups may be homogeneous with respect to user profiles of users of the subgroup. In other words, subgroups may comprise users with similar user profiles. Therefore, distance measures may be calculated based on differences between user profiles. The subgroups may, then, be determined based on the distance measures (see Figs. 3 and 4 for further details in this respect).

"Homogeneous" may therefore refer to clusters of (interesting) people sharing a similar profile. What "Interesting people" are, depends on the requesting user.

Real time data may be representative of a current location of a user. Therefore, the subgroup may consist of users in a set range with respect to the current location. Thus, the user in need of recommendation may be provided only with subgroups in a predefined area. For example, the user may be provided with a subgroup of users, wherein all users of the subgroup are currently in a soccer stadium (predefined area/range) or at a certain pub in a certain city.

The current location may be a geographic location. It is, therefore, possible to determine subgroups of users at same or close locations. Thus, the subgroup includes users that are close to each other. Also, if the subgroup is determined and a recommendation is determined, the user requiring a recommendation may set various parameters regarding which geographic locations should be considered. For example, the user may indicate that he is interested in information about similar users (e.g. people that would be interesting to meet) in the same city, in a certain area of the city, in a whole country and/or the like. Thus, it is possible to make recommendations for cities, soccer stadiums, pubs and so on.

Therefore, the people based location search can be done on a large scale, e.g. within a city. It can also be on a small scale, e.g. within a party. In the first case, most likely larger groups of people are identified, and the recommended location might be a specific pub. In the second case, a small group of people who are currently at a very detailed location within a party (e.g. the left hand corner of the living room) might be localized. In both cases, information about the "purity" of such cluster can be computed and given to the user, e.g. 90 % of the people in the club have a strong interest in folk music and 70 % of them are over 20 years old and 80 % are female.

Thus, the system may enable the user to find locations where people he/she would like to meet (or avoid) are present or have been present. Traditionally, a user in search of a specific place might look up a location directory listing or a dedicated magazine. This would, however, only provide general information, e.g. saying that pub A is commonly frequented by young people. It cannot give information about the people who are there at this specific moment in time. On a small scale the described method/system may also help the user to find exactly the small group of people who are likely to talk about a subject he is interested in, e.g. a discussion about motorbikes at a party. Such a system could alternatively be useful for locating violent people, for example within a soccer stadium or at a festival.

As is clear, the recommended locations may depend on two characteristics: the homogeneity of the people at a location and the similarity of the people's profiles (user profiles) with the profile of the user doing the search (user in need of recommendation = requesting user). Both characteristics could be covered with a separate mode, but they may alternatively be mixed by looking at both, similarity and homogeneity with a corresponding weighting. In the homogeneity mode, an icon might be shown at the recommended location indicating the major type of homogeneity, such as gender, age, musical taste, etc. Another possibility of representation would be a three-dimensional map where the homogeneity of people is the third dimension. In such a map, the degree of similarity with a user's profile could be visualized by different colors. For the similarity based mode it might be possible to select the most interesting types of similarity, the user is currently interested in. Furthermore, there might be a possibility to differentiate between similarity and dissimilarity for certain profile characteristics, such as the gender, i.e. if the user is interested to meet people from the same or a different gender, age, etc.

The current location may also be a virtual location. Thus, instead of real locations, people may also meet at virtual locations. Examples would be online games such as Second Live, chat-rooms or social websites that enable communication between people related to the website content, e.g. social browsing. In both cases people meet at a virtual location and if the crowd there is homogeneous in some respect and this homogeneous character is shared with a person's profile, the person probably want to visit that virtual location as well. An example is the release of a new song of a person's favorite band on their website. A lot of people with a similar music taste will meet there in order to discover the new song, and the person probably likes to do this as well.

In other words, the virtual location may be related to an online game, a currently visited web page or the like. It is, thus, e.g. possible to find web pages, e.g. identified via IP addresses, that are currently visited by a homogeneous group of users. For example, it may be possible to determine recommendations in the form of web pages currently being accessed by users having a similar user profile as the requesting user (user in need of recommendation). For example, if the user profile of the requesting user indicates that he/she likes pop songs, then it may be possible to determine web pages currently being accessed by a large number of pop fans.

The real time data may, therefore, comprise information regarding a web page or IP address a user is currently accessing.

The real time data may also comprise information regarding a content of a web page or other information source that a user is currently accessing.

Instead of web pages, the virtual locations could also be television or radio programs. If there is a good science fiction movie on air, that a person likes, a lot of people matching that person's taste will probably tune into that station at the same time and it is possible to discover that those people "meet" at the corresponding television station.

Thus, the real time data may be descriptive of an application and/or device a user is currently using. The real time data may indicate a currently watched television program, currently played computer game or the like.

The real time data may also be descriptive of an event, a user is currently participating in or following. For example, as stated, users of the subgroup may be currently watching a certain television show.

Instead of looking for people with a certain profile, it would alternatively or additionally be possible to look for known people groups like friends from a buddy list. Of course, a negative list of people a user doesn't like to meet could also be used and those lists could be combined with the standard profile based approach.

Fig. 3 shows a diagram 300 illustrating a combined profile and location space. In a first dimension 302 of diagram 300, the type of user profile, i.e. personal user data, are represented. In a second dimension 304, real time data is represented. In the example of Fig. 3, the real time data is related to a location, e.g. geographic location or virtual location of users.

In order to determine the subgroup of users, clusters are determined in the combined profile/location space. In the example of Fig. 3, a first cluster 306 is found. Cluster 306 is **characterized in that** users of this cluster (representing a subgroup) are football fans and the users are currently in a football stadium F in City M (predefined area, set range). Thus, the current location (real-time data) of the users of the first cluster 306 is the football stadium.

Further, a second cluster 308 is found. Second cluster 308 is **characterized in that** the user profiles of the users of cluster 308 (subgroup) indicate that the users like pop music and are currently in pub X in city M.

In an embodiment, it is possible to simply indicate the clusters 306, 308 to a user 310 in need of a recommendation. The clusters 306, 308 may be displayed by some kind of graphical representation to user 310. User 310 may, then, decide himself which kind of location he would like to visit based on the information regarding the clusters (subgroup of users) 306, 308.

As can be seen, the clusters (subgroups) 306, 308 are homogeneous in the sense that the users of the subgroups have a similar user profile and are located in a predefined area (football stadium F, pub X).

In order to provide further information or a recommendation to user 310, it may be possible to calculate distance measures for the clusters. In the example of Fig. 3, first and second distances D1, D2 are determined for the first and second clusters 306, 308, respectively.

The distance measures may depend on the distance of a user profile of user 310 to an average user profile of the users of clusters 306, 308. Additionally or alternatively, the distance measures may depend on the distance between the geographic location of user 310 with respect to the (mean) location of the users of the subgroup (clusters).

In the example of Fig. 3, distance D1 may e.g. be determined depending on the user profile of user 310 as well as the position of user 310. In the example of Fig. 3, user 310 has a user profile indicating that he/she likes sports. Further, exemplary, it is assumed that user 310 is currently in city M. Further, the users of the subgroup corresponding to cluster 306 are in football stadium F in city M. Also, the users of the subgroup corresponding to cluster 308 are in pub X in city M. In the example of Fig. 3, it is assumed that distance D1 is smaller than D2. Therefore, when user 310 requests a recommendation, the user may be recommended as first choice to go to football stadium F and as second choice to go to pub X.

Fig. 4 shows a further diagram 400 illustrating a combined profile/event space.

A first dimension 402 of the profile/event space represents profiles of users. A second dimension 404 represents real time data that are determined event-based. In the example of Fig. 4, the event-based real time data 404 are related to the type of television program the users are currently watching.

As can be seen, in the profile/event space, a first cluster 406 and a second cluster 408 exist. Users of the subgroup corresponding to cluster 406 are currently watching a football game on a certain television station. Further, users of the subgroup corresponding to the cluster 408 are currently watching Desperate Housewives on another television station.

Further, the user profiles of users corresponding to cluster 406 indicate that the users are football fans. Also, the user profiles of the users corresponding to cluster 408 indicate that the users have an age between 20 and 35 years old.

Further, the user profile of user 410 (requesting user) indicates that user 410 has an age of 39 years and is currently watching a car race. This information might be used for determining distances D3 and D4 to users of subgroups corresponding to clusters 406, 408.

Based on distances D3, D4, the user 410 might be provided with a recommendation. Since distance D3 is shorter than D4, the first choice for the recommendation for user 410 might be the suggestion to switch to the television station currently broadcasting the football game currently watched by users of cluster 406. The second choice for the recommendation would be to tune to the station currently broadcasting an episode of Desperate Housewives.

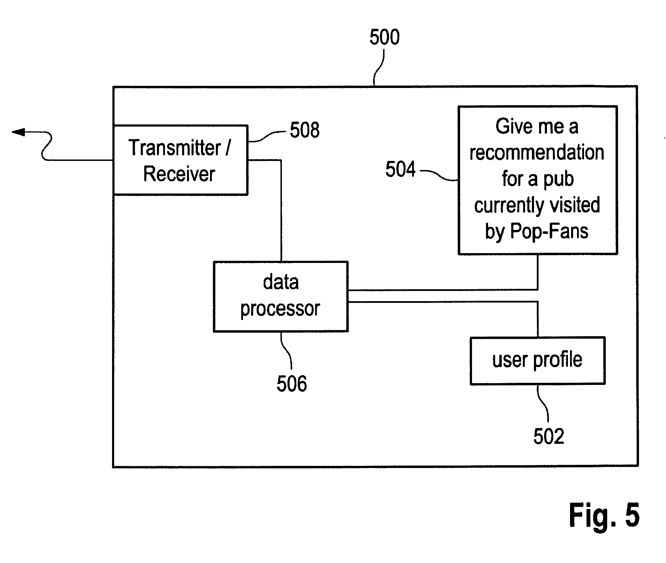

Fig. 5 shows a device 500, e.g. a mobile device, comprising a storage 502, display 504, data processor 506, and transmitter/receiver 508.

Storage 502 may store a user profile, and display 504 allows a user to input a request for a recommendation for a location or event of interest. The data processor 506 processes the request and user profile. Further, data processor 506 determines real time data that are descriptive of a state of an application of the device and/or of a geographic location of the device. Transmitter/receiver 508 sends this information to a further device, e.g. a server. The server may, thereupon determine a recommendation and send this recommendation to device 500. Device 500 then receives the recommendation and displays it to the user on display 504.

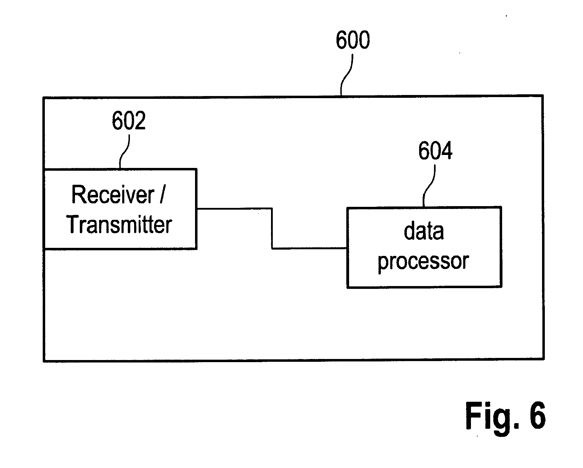

Fig. 6 shows a further device according to an embodiment, e.g. a server, comprising a receiver/transmitter 602 and data processor 604. Receiver/transmitter 602 might communicate with mobile devices, e.g. a device 500 of Fig. 5. Thus, receiver/transmitter 602 may receive a user profile and real time data being descriptive of a state of an application of the mobile device and/or of a geographic location of the mobile device connected to the server. Further, receiver/transmitter 602 is adapted to receive a request for a recommendation for a location or event of interest.

The server 600 might collect respective information from a large number of mobile devices. Thus, server 600 collects user profiles and locations/events that users of mobile devices participate in from the mobile devices. This information is then used to determine subgroups (clusters) of users having a similar user profile and similar real time data. Information regarding the subgroups and/or a specific recommendation is then sent to a user of a mobile device requesting a recommendation/information about other users via receiver/transmitter 602.

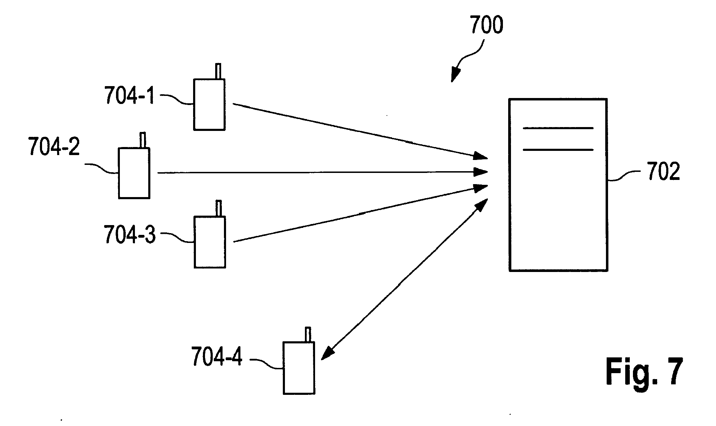

Fig. 7 shows an embodiment of a possible hardware realization. The system 700 of Fig. 7 comprises a server 702, and mobile devices 704-1 to 704-4 connected to server 702. In the embodiment of Fig. 7, server 702 might be a central server collecting information from the mobile devices 704. The collected information is the user profiles of users of the mobile devices 704 and the current location and/or application (event) data being representative of an application the user is currently using. Thus, real-time data is collected for the mobile devices.

Thus, each client device (mobile device) is location aware and provides the current position to the server at regular intervals. In addition, the device provides the server the profile information of the device owners that could be stored locally on the mobile devices or at the server. The server is then using known clustering techniques to find homogeneous clusters within a combined profile/location space or combined profiled/event space where each profile characteristics and the position coordinates represent dimensions in a multi-dimensional feature space. A homogeneous cluster in that feature space is representing a group of somehow similar people at the same location.

In the example of Fig. 7, the user of mobile device 704-4 requests a recommendation. Therefore, a respective request is sent to the server 702 which in response sends back a respective recommendation.

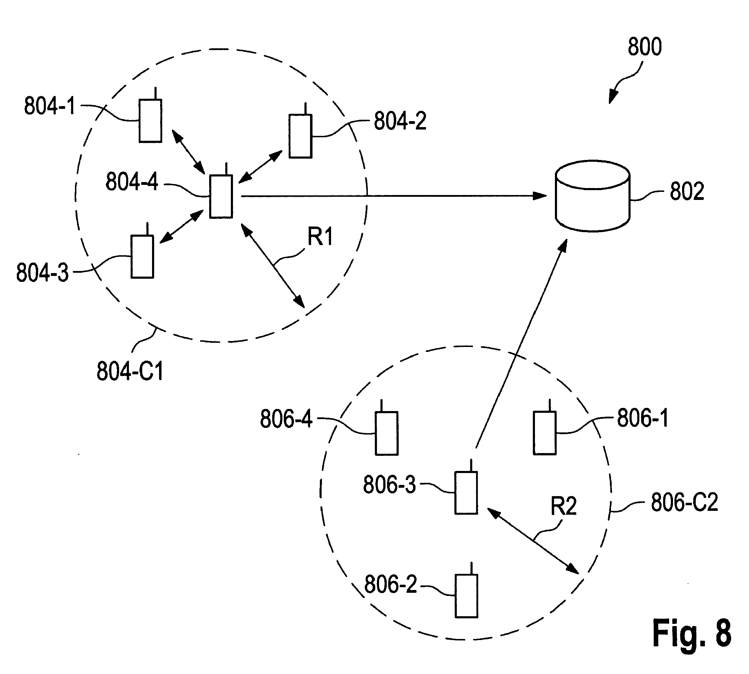

Fig. 8 shows an embodiment of a further hardware realization based on a peer-to-peer system 800. Peer-to-peer system 800 comprises a shared storage 802 and clusters 804-C1, 806-C2 of mobile devices 804, 806.

In each cluster 804-C1, 806-C2 mobile devices collect information, i.e. user profiles and location/event information (real time data) of other mobile devices in the range of the respective device. For example, in cluster 804-C1, mobile device 804-4 collects information from mobile devices 804-1, 804-2, 804-3 in range R1.

Mobile device 804-4 then sends this information to shared storage 802. Thus, the profile and location information is shared into a virtual storage area of the peer-to-peer system 800.

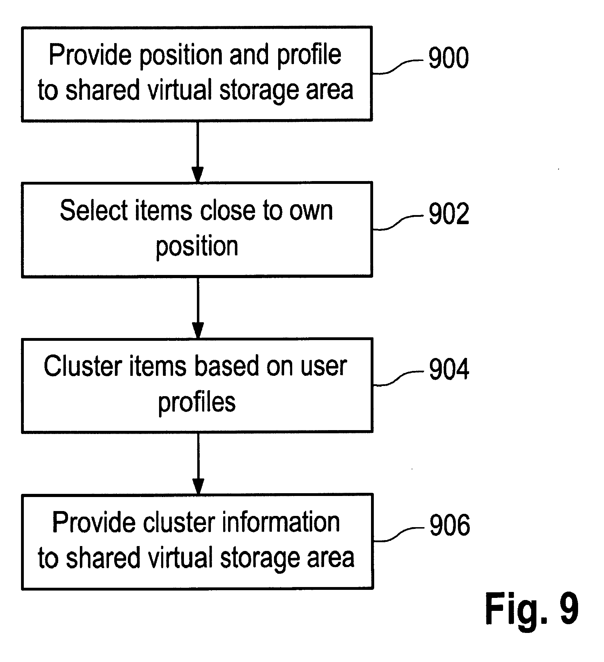

As illustrated in Fig. 9, each device may then identify items that are close to the own position (blocks 900, 902 in Fig. 9). The items are then clustered based on their user profile (block 904 in Fig. 9). The found clusters and the corresponding cluster information such as the cluster centre and covariance within the feature space is then provided to the virtual storage area (block 906). By accessing the clustering results from all devices within a larger position context, a device is able to find the most important clusters and provide it to the user as potential point of interest.

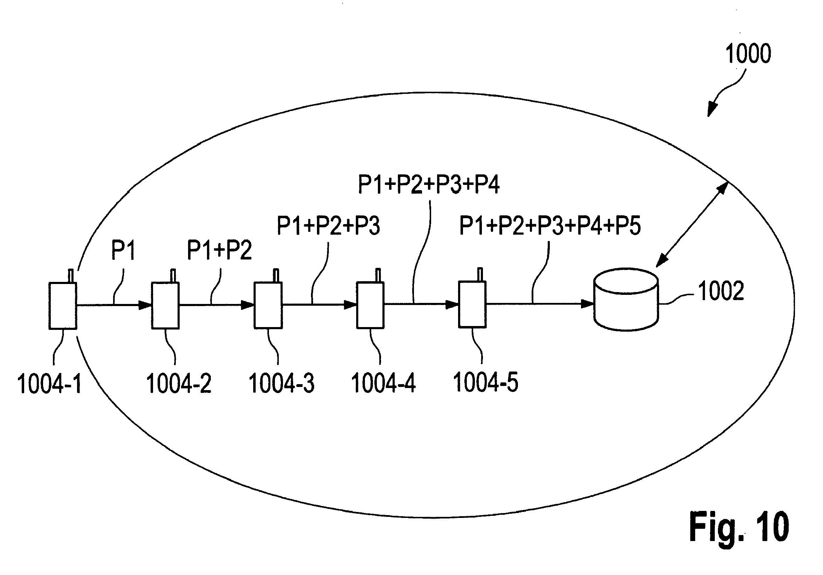

Fig. 10 shows a further embodiment of a hardware realization based on a personal area network technology, e.g. based on short range wireless transmission such as e.g. Bluetooth or wireless LAN that is used to find clusters of similar users. The system 1000 of Fig. 10 comprises mobile devices 1004-1 to 1004-5 each communicating by near field communication (e.g. Bluetooth, wireless LAN), with surrounding mobile devices. For example, mobile device 1004-1 communicates with mobile device 1004-2. Each device transmits information to the neighbor device, wherein the information indicates the user profile of the user of the respective device as well as real time data. For example, mobile device 1004-1 transmits the user profile P1 of the user of device 1004-1 to mobile device 1004-2. Further, the location/event information (real time data) is transmitted from mobile device 1004-1 to mobile device 1004-2.

Thus, in order to collect information about other users at the same location, a profile might be sent to all devices within the transmission range of the wireless connection. Furthermore, profile information might be forwarded by devices resulting in a multi-hop scenario, where the maximum number of hops a profile is allowed to travel, is limited. Each device will then run a clustering algorithm to find similar profiles and if a relevant homogeneous cluster is found, the information might again be sent to a server or to a peer-to-peer system in order to make that information available to all users. The advantage of this approach is that the traffic and storage requirement of the server is minimized as only the information about found clusters has to be stored and not the position and profile information of all users. Instead of using a server for providing relevant clusters, a message push protocol such as SMS might be used to provide cluster information to all devices.

In order to avoid flooding with messages from all devices within a cluster, the device that identified the cluster might provide this information to all devices at the same location. Only if one of the devices is able to locate the centre of the cluster more precisely, it is allowed to repeat the information about that cluster. The cluster homogeneity might be used as precision measure for that.

Although specific embodiments have been illustrated and described herein, it will be appreciated by those of ordinary skill in the art that a variety of ultra net and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

## Claims

1. A method to determine a subgroup of users out of a group of users, comprising:
providing user profiles for each user of said group of users;
providing real-time data of users of said group of users;
determining said subgroup of users depending on said user profiles and said real-time data.

2. The method of claim 1, wherein said subgroup is homogeneous with respect to some aspect of user profiles of users of the subgroup.

3. The method of claim 1 or 2, wherein for each user profile of users of the subgroup, a distance measure is determined, and for each user profile of users of the subgroup, said distance measure lies below a threshold.

4. The method of any of the preceding claims, wherein said real-time data are representative of a current location of a user.

5. The method of claim 4, wherein the subgroup consists of users in a set range with respect to the current location.

6. The method of claim 4 or 5, wherein the current location is a geographic location.

7. The method of claim 4 or 5, wherein the current location is a virtual location.

8. The method of any of the preceding claims, wherein said real-time data comprise information regarding a web page or IP address, a user is currently accessing.

9. The method of any of the preceding claims, wherein said real-time data comprise information regarding a content of a web page or other information source, a user is currently accessing.

10. The method of any of the preceding claims, wherein said real-time data are descriptive of an application and/or device a user is currently using.

11. The method of any of the preceding claims, wherein said real-time data are descriptive of an event a user is currently participating in or following.

12. A method for recommendation of a location or event of interest to a user of a device, comprising:
determining a subgroup of users out of a group of users based on user profiles and real-time data of users of the group of users;
providing a user profile of said user of said device;
determining a distance measure between said user profile and the user profiles of users of the subgroup;
determining said recommendation depending on the distance measure.

13. The method according to any of claims 1 to 12, wherein said method is executed on a mobile device connected to a peer-to-peer network, wherein said user profiles and/or said real-time data are collected locally by said mobile device, and then sent to a shared storage of said peer-to-peer network.

14. A device, comprising:
a storage adapted to store a user profile;
a user interface adapted to allow a user to input a request for a recommendation for a location or event of interest;
a data processor adapted to determine real-time data being descriptive of a state of an application of the device and/or of a geographic location of the device;
a transmitter adapted to send said user profile and said real-time data to a further device;
a receiver adapted to receive the recommendation.

15. The device of claim 12, wherein the device and further device are part of a peer-to-peer network.

16. A server, comprising:
a receiver adapted to receive a user profile and real-time data being descriptive of a state of an application of a device and/or of a geographic location of the device connected to the server, and further adapted to receive a request for a recommendation for a location or event of interest;
a data processor adapted to determine a subgroup of users depending on said user profile and said real-time data, and to determine the recommendation depending on the subgroup;
a transmitter adapted to send the recommendation to the device.

17. The device of claim 14, wherein the device and sever are part of a peer-to-peer network.

18. A computer program product including computer program instructions that cause a computer to execute a method to determine a subgroup of users out of a group of users, comprising:
providing user profiles for each user of said group of users;
providing real-time data of users of said group of users;
determining said subgroup of users depending on said user profiles and said real-time data.

19. Computer readable storage medium,
comprising a computer program product according to claim 18.
